(19) Europäisches Patentamt / European Patent Office / Office européen des brevets

(11) **EP 3 972 136 B1**

(12) **EUROPÄISCHE PATENTSCHRIFT**

(45) Veröffentlichungstag und Bekanntmachung des Hinweises auf die Patenterteilung:
**17.07.2024   Patentblatt 2024/29**

(21) Anmeldenummer: **21197065.2**

(22) Anmeldetag: **16.09.2021**

(51) Internationale Patentklassifikation (IPC):
**H04B 1/04** (2006.01)

(52) Gemeinsame Patentklassifikation (CPC):
**H04B 1/0458**

(54) **VERFAHREN SOWIE EINRICHTUNG ZUR BESTIMMUNG DER ANTENNENANPASSUNG**

METHOD AND APPARATUS FOR DETERMINING ANTENNA MATCHING

PROCÉDÉ, AINSI QUE DISPOSITIF DE DÉTERMINATION DE L'ADAPTATION DE L'ANTENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2020   DE 102020124510**

(43) Veröffentlichungstag der Anmeldung:
**23.03.2022   Patentblatt 2022/12**

(73) Patentinhaber: **Diehl Metering Systems GmbH 90451 Nürnberg (DE)**

(72) Erfinder:
• **Schröter, Simon**
  **91052 Erlangen (DE)**
• **Becke, Gerhard**
  **91301 Forchheim (DE)**
• **Kauppert, Thomas**
  **90455 Nürnberg (DE)**
• **Beckhuis, Frank**
  **91126 Kammerstein (DE)**

(74) Vertreter: **Diehl Patentabteilung c/o Diehl Stiftung & Co. KG Stephanstraße 49 90478 Nürnberg (DE)**

(56) Entgegenhaltungen:
**US-A- 5 564 086         US-A1- 2010 073 103
US-A1- 2011 058 627**

**Beschreibung**

Die vorliegende Erfindung betrifft ein Verfahren zur Bestimmung der Antennenanpassung gemäß dem Oberbegriff des Anspruchs 1. Des Weiteren betrifft die vorliegende Erfindung eine Einrichtung zur Bestimmung der Antennenanpassung gemäß dem Oberbegriff des Anspruchs 15.

Technologischer Hintergrund

Vorliegend geht es um die drahtlose Kommunikation zwischen Knoten, insbesondere Zähler, vorzugsweise Verbrauchszähler (Smart Metering Devices) für Wasser, Gas, Wärme oder Energie und Basisstationen bzw. sogenannten Konzentratoren, die die Daten der Zähler übernehmen und z. B. an ein entferntes Head-End weiterübertragen. Die drahtlose Kommunikation zwischen den Knoten und Basisstationen kann insbesondere in den Frequenzbereichen für Short Range Devices (SDR) nach der ETSI EN 300 bzw. EN 13757-4 stattfinden. Beispielsweise kann es sich hierbei um ein Kommunikationssystem mit der Bezeichnung "Wireless M-Bus" gemäß CEN/TC 294 handeln.

Durch wechselnde Umgebungseinflüsse in verschiedenen Einbausituationen eines Knotens können Verstimmungen der Sendeantenne des Endgeräts auftreten. Sowohl Metall- als auch Kunststoffteile (Dielektrika) im Nahfeld der Antenne können solche Verstimmungen zur Folge haben. Hierzu zählen z.B. Schachtdeckel, Abdeckhauben, Gehäuseteile sowie Rohrstücke. Bei sogenannten Clip-on-Modulen, d.h. bei Verbrauchszählern, die an der Außenseite eines Versorgungsrohres aufgesetzt werden, können die Materialien und die Ausformungen des Verbrauchszählers zu Verstimmungen der Sendeantenne desselben führen.

Druckschriftlicher Stand der Technik

Ein Verfahren gemäß dem Oberbegriff des Anspruchs 1 ist aus der EP 3 285 403 A1 bekannt. Bei diesem Verfahren versendet ein Zähler-Funkmodul mit vorgegebener Sendefrequenz nacheinander eine Reihe von Paketen bei jeweils unterschiedlichen Antennenimpedanz-Anpassungen. Von dem Funkmodul der Basisstation wird anschließend die Empfangsfeldstärke der jeweiligen Pakete ermittelt und eine Information darüber an das Funkmodul des Zählers zurückgesendet. Das Funkmodul des Zählers sendet dann diejenigen Pakete, bei denen die beste Empfangsfeldstärke gemessen wurde. Dieses bekannte Verfahren erfordert eine bidirektionale Übertragung. Darüber hinaus wird der Funkkanal durch die notwendigerweise zu übertragenden Daten stark belastet.

Aus der DE 10 2016 010 045 A1 ist ein weiteres Verfahren zum Verbessern der Antennenanpassung bei einem Smart-Meter-Zähler bekannt. Die Antennenanpassung wird hierbei durch Umschalten zwischen unterschiedlich bemessenen Resonanz-Induktivitäten oder -Kapazitäten vorgenommen. Jeder Smart-Meter-Zähler eines Netzwerks sendet eine Mehrzahl von Testpaketen mit entsprechend unterschiedlich bemessener Resonanz-Induktivität oder -Kapazität an einen Datensammler. Der Datensammler wertet die Testpakete aller Smart-Meter-Zähler hinsichtlich deren Empfangsfeldstärke aus, wählt das Testpaket mit der höchsten Empfangsfeldstärke aus und meldet die Auswahl zurück an den jeweiligen Smart-Meter-Zähler. Dieser sendet fortan mit einer entsprechenden Antennenanpassung. Nachteilig bei diesem Verfahren ist es, dass dieses Verfahren eine bidirektionale Übertragung erfordert. Zudem wird auch hier der Funkkanal verstärkt belegt.

Die US 5 564 086 A beschreibt ein Verfahren sowie eine Anordnung zur Verbesserung der Betriebseigenschaften eines Funksenders. Zur Anpassung der Impedanz der Antenne des Funksenders werden Vorwärtssignalanteile sowie von der Antenne reflektierte Signalanteile eines verstärkten Sendesignals mittels eines Richtkopplers extrahiert, in ein digitales Format umgewandelt, der Reflexionskoeffizient berechnet und mit in einer Look-Up-Tabelle gespeicherten, bereits bei der Produktion eingeschriebenen Werten verglichen. In einer alternativen Ausgestaltung ohne aufwendige Speicherung von Daten reflektierter Anteile wird die DC-Stromaufnahme durch den Leistungsverstärker als Feedback Steuersignal beschrieben.

Die US 2011/0058627 A1 beschreibt die dynamische Auswahl eines von mehreren Anpassungsnetzwerken des Senders eines Mobilfunkgeräts bei variierenden Impedanzen aufgrund der Verwendung von Headsets oder flexiblen externen Antennen. Es sind eine Mehrzahl von Anpassungsnetzwerken vorgesehen. Nach Initialisierung stellt der Funkempfänger für jedes Anpassungsnetzwerk eine identische Testfrequenz z. B. eine vom Nutzer gespeicherte Radiofrequenz ein und bestimmt die digitalen Signaleigenschaften wie RSSI, Locking Speed oder Block Error Rate (BER) des empfangenen Funksignals. Die Auswahl des geeigneten Anpassungsnetzwerks erfolgt anhand der vorher bestimmten digitalen Signaleigenschaften.

Aufgabe der vorliegenden Erfindung

Die Aufgabe der vorliegenden Erfindung besteht darin, das Verfahren zur Bestimmung der Antennenanpassung zu verbessern.

Lösung der Aufgabe

Die vorliegende Aufgabe wird durch die Merkmale des Anspruchs 1 sowie des Anspruchs 15 gelöst. Zweckmäßige Ausgestaltungen des jeweiligen Verfahrens sind in den Unteransprüchen beansprucht.

Erfindungsgemäß wird bei verschiedenen Antennenimpedanz-Anpassungen die jeweilige DC-Stromaufnahme und/oder die Versorgungsspannung des Leistungsverstärkers gemessen und auf Basis der bzw. des jeweiligen Messergebnisse(s) eine Auswahl einer Antennenanpassung der verschiedenen Antennenanpassungen vorgenommen. Hierdurch wird erreicht, dass eine automatische und adaptive Antennenanpassung autark alleine im Knoten z. B. im Zähler realisiert werden kann, da das erfindungsgemäße Verfahren ohne Rückkanal auskommt. Das erfindungsgemäße Verfahren ist deshalb sowohl für eine unidirektionale als auch für eine bidirektionale drahtlose Kommunikationsstrecke einsetzbar. Zudem kann das Verfahren hardwaretechnisch sehr einfach realisiert werden. Oftmals ist in einem Knoten z. B. bereits eine Strommesseinrichtung, z. B. für die Sicherstellung einer Ladungskontrolle, vorhanden. Diese kann gemäß der vorliegenden Erfindung nunmehr in vorteilhafter Weise für eine Messung der DC-Stromaufnahme bei verschiedenen Antennenimpedanz-Anpassungen mit verwendet werden. Alternativ kann aber auch ein Strommesswiderstand im DC-Versorgungspfad der HF-Endstufe eingefügt werden und der Spannungsabfall an dem Strommesswiderstand kann mit einem Analog-Digital-Umsetzer gemessen werden, z.B. wie er ohnehin schon im Mikroprozessor eines Zählers vorhanden ist. Das erfindungsgemäße Verfahren kann somit günstig und platzsparend auf einem Knoten appliziert werden. Ferner benötigt das Verfahren keine zusätzlichen Komponenten im HF-Pfad, wie z.B. Richtkoppler, und vermeidet damit auch unerwünschte Einfügedämpfungen.

Dadurch, dass im Vorfeld für M-verschiedene Antennenimpedanzen je eine Messung der jeweiligen DC-Stromaufnahme und/oder Versorgungsspannung des Leistungsverstärkers bei N-verschiedenen Antennenimpedanz-Anpassungen durchgeführt wird, die Strom- und/oder Versorgungsspannungs-Messwerte in Zuordnung zu den N-verschiedenen Antennenimpedanz-Anpassungen sowie M-verschiedenen Antennenimpedanzen in einer Messwerttabelle abgelegt werden, während des Betriebs des Zählers bei N-verschiedenen Antennenimpedanz-Anpassungen die jeweilige tatsächliche DC-Stromaufnahme und/oder Versorgungsspannungswerte des Leistungsverstärkers gemessen wird, die im Vorfeld erzeugten Strom-und/oder Spannungs-Messwerte mit den während des Betriebs des Zählers erzeugten tatsächlichen Strom-und/oder Spannungs-Messwerten verglichen werden und aus dem Ergebnis des Vergleichs eine Antennenimpedanz-Anpassung aus den N-verschiedenen Antennenimpedanz-Anpassungen ausgewählt wird, wird die Möglichkeit geschaffen, die Einbau-individuelle Antennenimpedanz eindeutig zu bestimmen und eine für die individuelle Einbausituation bzw. und/oder Betriebssituation günstige Antennenimpedanz-Anpassung auszuwählen.

Zweckmäßigerweise wird diejenige Antennenimpedanz-Anpassung ausgewählt, bei der die von der Antenne abgestrahlte Leistung am größten ist.

Die im Vorfeld erzeugten Stromaufnahme- und/oder Versorgungsspannungs-Messwerte sowie die während des Betriebs des Zählers erzeugten tatsächlichen Messwerte ergeben jeweils Muster an Werten, wobei für die Auswahl der geeigneten Antennenimpedanz-Anpassung diese Wertemuster verglichen werden können. Hierfür kann vorzugsweise ein geeigneter Algorithmus zum Einsatz kommen.

Eine entsprechende Auswertelogik kann in einfacher Weise mit in den Mikroprozessor des Zählers integriert werden.

Die Messung der DC-Stromaufnahme des Leistungsverstärkers erfolgt zweckmäßigerweise über eine Strommessschaltung, vorzugsweise über einen geeigneten Messwiderstand, z.B. einen sogenannten Shunt-Widerstand, im Versorgungspfad des Leistungsverstärkers.

Zweckmäßigerweise kann der Spannungsabfall am Messwiderstand über eine geeignete Messeinrichtung, zum Beispiel von einem Differenzverstärker und einem A/D-Umsetzer bestimmt werden. Ein solcher A/D-Umsetzer ist ohnehin in dem Mikrocontroller des Knotens vorhanden. Die Versorgungsspannung des Leistungsverstärkers kann durch eine analoge Methode und Ausführung bestimmt werden.

Die Strommessschaltung kann sich in der positiven oder in der negativen Versorgungsleitung des Leistungsverstärkers befinden.

Zur Messung der jeweiligen DC-Stromaufnahme und/oder Versorgungsspannung des Leistungsverstärkers nimmt der Knoten bei jeder der verschiedenen Antennenimpedanz-Anpassungen eine HF-Aussendung vor, bei der die DC-Stromaufnahme und/oder Versorgungsspannung des Leistungsverstärkers gemessen und in einer entsprechenden Tabelle abgelegt wird.

Hierbei kann die jeweilige HF-Aussendung bei den verschiedenen Antennenimpedanz-Anpassungen durch den Zähler als kurze Dummy-Aussendung vor der Aussendung des eigentlichen Datentelegramms durchgeführt werden. Im Rahmen dieser Dummy-Aussendungen wird auf Basis des erfindungsgemäßen Verfahrens die geeignete Antennenimpedanz-Anpassung aus den verschiedenen Antennenimpedanz-Anpassungen ermittelt. Im Anschluss daran wird das Datentelegramm unter der ausgewählten Antennenimpedanz-Anpassung versendet.

Alternativ kann die jeweilige HF-Aussendung bei verschiedenen Antennenimpedanz-Anpassungen durch den Knoten über die Versendung mehrerer Datentelegramme hinweg durchgeführt werden. Somit ist hierbei erst nach mehreren versendeten Datentelegrammen eine Festlegung einer günstigen Antennenimpedanz-Anpassung aus den verschiedenen Antennenimpedanz-Anpassungen möglich.

Ganz besonders eignet sich das erfindungsgemäße Verfahren für Funksysteme im 169 MHz-Band, da die in solchen Funksystemen integrierten Antennen typischerweise nur sehr geringe Bandbreiten haben, gleichzeitig aufgrund der vergleichsweise hohen erlaubten Sendeleistungen die auftretenden DC-Ströme besonders hoch sind, sodass die Unterschiede zwischen den Strömen bei verschiedenen Ausgangsimpedanzen besonders stark ausgeprägt sind. Das erfindungsgemäße Verfahren kann somit bei derartigen Funksystemen besonders einfach appliziert werden.

Des Weiteren betrifft die vorliegende Erfindung auch eine Einrichtung zur Bestimmung der Antennenanpassung für einen drahtlos, vorzugsweise in einem Nahbereichs-Frequenzband kommunikationsfähigen Zähler gemäß den Merkmalen des Anspruchs 15.

Beschreibung der Erfindung anhand von Ausführungsbeispielen

Nachstehend werden Ausgestaltungen der vorliegenden Erfindung anhand von Zeichnungsfiguren näher erläutert. In den Zeichnungsfiguren wiederkehrende Merkmale werden der Übersichtlichkeit halber mit einem Bezugszeichen versehen. Es zeigen:

Fig. 1   eine stark vereinfachte schematische Darstellung eines drahtlosen Datenübertragungssystems zur Anwendung des erfindungsgemäßen Verfahrens;

Fig. 2   ein Beispiel eines Blockschaltbilds zum Aufbau einer Antennenanpassung mit Ansteuerung gemäß dem erfindungsgemäßen Verfahren;

Fig. 3   verschiedene Formen der Realisierung von Antennenimpedanz-Anpassungsnetzwerken in einer schematischen Gesamtdarstellung (Fig. 3a), in einer detaillierteren Darstellung eines einzelnen Antennenimpedanz-Anpassungsnetzes (Fig. 3b) sowie als Realisierung über Schalter (Fig. 3c und Fig. 3d);

Fig. 4   ein Beispiel einer Schaltung zur Messung der Antennenanpassung über den DC-Strom des Verstärkers und zwar einmal in der positiven Versorgungsleitung des Verstärkers (Fig. 4a) sowie in der negativen Versorgungsleitung des Verstärkers (Fig. 4b);

Fig. 5   ein Beispiel einer Schaltung zur Messung der Antennenanpassung über die Versorgungsspannung des Verstärkers; sowie

Fig. 6   das Zusammenwirken zwischen komplexer Antennenimpedanz und Anpassungsnetzwerk.

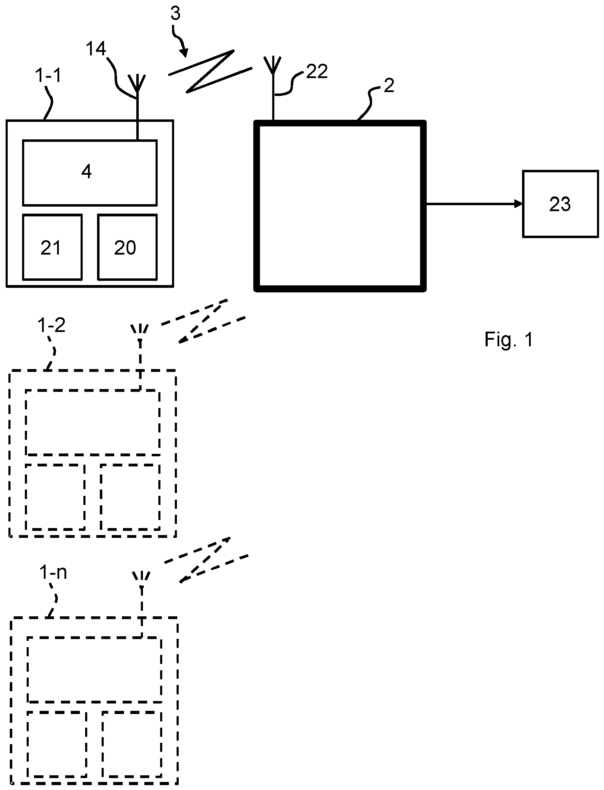

Fig. 1 zeigt ein drahtloses Kommunikationssystem, bei dem das erfindungsgemäße Verfahren zum Einsatz kommt. Das Kommunikationssystem umfasst mindestens einen, vorzugsweise eine Mehrzahl von kommunikationsfähigen Knoten 1-1, 1-n, insbesondere Zähler, bei denen es sich vorzugsweise um sogenannte Verbrauchszähler (Smart Metering Devices) handeln kann. Die Knoten 1-1, 1-n können üblicherweise in einer Hausinstallation oder Gebäudeinstallation fest verbaut sein und dazu dienen, den in dem Haus bzw. Gebäude stattfindenden Verbrauch an Wasser, Gas, Energie oder Elektrizität zu bestimmen und die diesbezüglichen Daten für einen Export bereitzuhalten. Die Daten werden drahtlos über ein Nahbereichs-Frequenzband 3 an eine Basisstation 2 übertragen. Die Basisstation 2 wird auch "Datensammler" oder "Konzentrator" genannt. Die Basisstation 2 kann fest verbaut sein. Es kann sich allerdings auch um eine mobile Basisstation handeln. Sie dient dazu, die Daten unterschiedlicher Knoten 1-1, 1-n des Netzwerks aufzusammeln. Ein mobiler Datensammler empfängt die Daten der einzelnen Knoten 1-1, 1-n im Vorbeifahren.

Die Daten werden von der Basisstation 2 über eine geeignete Datenverbindung (z.B. WAN) an ein sogenanntes Head-End 23 übertragen, in dem die Weiterverarbeitung und Auswertung der Daten der Knoten 1-1, 1-n stattfindet.

Jeder Knoten 1-1, 1-n verfügt zu diesem Zweck über einen Transceiver 4 mit Antenne 14 und mindestens einen Mikroprozessor, welcher in Fig. 1 lediglich aus Gründen der Übersichtlichkeit nicht eingezeichnet ist. Die Antenne 14 kann sich innerhalb des Gehäuses des Knoten befinden oder an der Außenseite angebracht sein. Zum Empfang der Datentelegramme vom Zähler 1-1, 1-n besitzt auch die Basisstation 2 eine Antenne 22. Die Übertragung der Daten von der Basisstation 2 zum Head-End 23 kann beispielsweise über das Internet erfolgen.

Jeder Knoten 1-1, 1-n kann (sofern er Verbrauchsdaten übermittelt) einen Sensor 21 für die Messung an Verbrauchsgut (Wasser, Energie, Gas oder Elektrizität) aufweisen oder alternativ als Funkmodul mit einem Sensor 21 verbunden sein. Beispielsweise kann ein entsprechender Knoten 1-1, 1-n als Clip-On-Modul mit einem Sensor, z. B. einem mechanischen Zähler, verbunden sein.

Der Knoten 1-1, 1-n könnte alternativ oder zusätzlich auch als Aktor ausgebildet sein.

Vorzugsweise handelt es sich bei dem Nahbereichs-Frequenzband 3 in Fig. 1 um ein 169 MHz-Band. MHz-Funksysteme sind schmalbandig d. h. haben die Eigenschaft, dass integrierte Antennen mit einer sehr geringeren Bandbreite verwendet werden, was eine besonders hohe Notwendigkeit eines adaptiven Antennen-Matchings begründet. Daneben sind wegen der vergleichsweise hohen, zulässigen Sendeleistung (bis zu 250 mW) die im Leistungsverstärker auftretenden DC-Ströme besonders hoch.

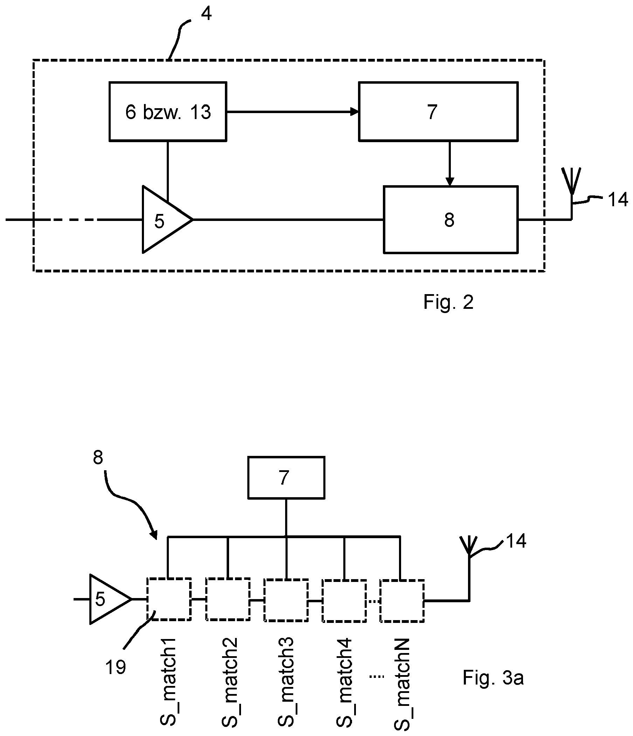

Funktional gliedert sich die vorliegende Erfindung gemäß Fig. 2 in ein steuerbares Antennen-Anpassnetzwerk 8, eine DC-Strom- 6 und/oder Versorgungsspannungsmessschaltung 13, also eine Schaltung zur Messung des DC-Stroms und/oder der Versorgungsspannung des HF-Leistungsverstärkers 5, und einer Kontrolllogik 7. Der HF-Leistungsverstärker 5 kann ein Bestandteil des Transceivers 4 sein. Diese funktionalen Bestandteile sind in dem jeweiligen Knoten 1-1, 1-n vorgesehen. Bei dem Antennen-Anpassnetzwerk 8 handelt es sich um N-verschiedene Antennenimpedanz-Anpassungen S_match1-S_matchN, die wahlweise auf den Ausgangspfad des HF-Leistungsverstärkers 5 aufgeschaltet werden können.

Mittels der Messschaltung 6 bzw. 13 kann die DC-Stromaufnahme und/oder die Versorgungsspannung des Leistungsverstärkers 5 bei jeder aufgeschalteten Antennenimpedanz-Anpassung S_match1-S_matchN gemessen werden. Auf Basis des jeweiligen Messergebnisses kann dann eine Auswahl einer besonderen Antennenanpassung der N-verschiedenen Antennenimpedanz-Anpassungen S_match1-S_matchN erfolgen, mit der ein Datentelegramm bzw. eine Datensendung vom Knoten 1-1, 1-n zum Basisgerät 2 durchgeführt werden kann.

Fig. 3a zeigt ein Beispiel eines Antennen-Anpassnetzwerks 8 in detaillierter schematischer Darstellungsweise. Es umfasst unterschiedliche Antennenimpedanz-Anpassungen (Anpassungsnetze) S_match1-S_matchN, die jeweils über die Kontrolllogik 7 angesteuert und in den Sendepfad des HF-Leistungsverstärkers 5 geschaltet werden können. Das Antennen-Anpassnetzwerk 8 realisiert somit mehrere schaltbare HF-Pfade, in denen jeweils verschiedene Antennenimpedanz-Anpassungen realisiert sind. Entsprechende Antennenimpedanz-Anpassungen können beispielsweise durch unterschiedliche Induktivitäten oder komplexe Widerstände realisiert werden.

Insbesondere können Antennen-Anpassnetzwerke beispielsweise in der DE 10 2016 010 045 A1 beschriebenen Art und Weise beispielsweise durch Umschalten zwischen unterschiedlich bemessenen Resonanz-Induktivitäten oder-Kapazitäten erstellt werden. Hierzu dienen Schalter 26, mit denen von der Kontrollogic 7 unterschiedliche Antennenanpassungen (Anpassungsnetze) wahlweise auf die Verbindungsleitung von Leistungsverstärker 5 und Antenne 14 aufgeschaltet werden können.

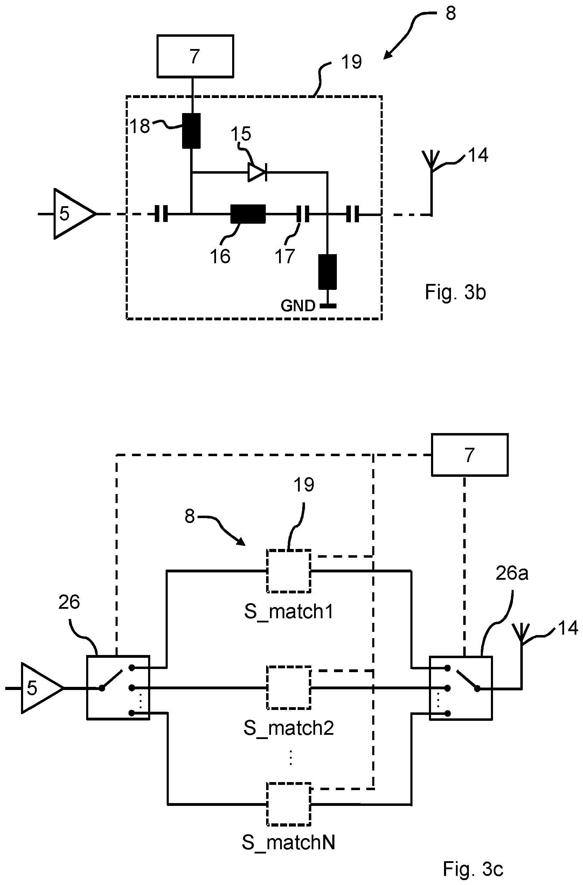

In einer anderen in Fig. 3b gezeigten Ausführungsvariante kann ein Antennen-Anpassnetzwerk 8 vorgesehen sein, welches Pin-Dioden 15 enthält, zu denen die einzelnen Komponenten der Antennenanpassung 19 parallel geschaltet sind. Wird die jeweilige Pin-Diode 15 der Antennenanpassung 19 im Leerlauf betrieben, so stellt sie aus HF-Sicht ebenfalls einen Leerlauf dar, mit der Folge, dass das HF-Signal vom HF-Leistungsverstärker durch das Anpasselement 16 (z.B. Induktivität) fließt, wodurch die konkrete Antennenanpassung wirksam ist. Wird die Pin-Diode 15 demgegenüber von einem DC-Steuerstrom durchflossen, so wirkt sie wie ein Kurzschluss, sodass das HF-Signal vom HF-Leistungsverstärker durch die Pin-Diode 15 und nicht durch das Anpasselement 16 fließt. Zwei Kondensatoren 17 trennen die Schaltung zwischen Erde (GND) und der Pin-Diode 15. Bei dem Bauteil 18 handelt es sich um eine Spule bzw. Induktivität. Entsprechende Antennenanpassungen 19, wie in Fig. 3b gezeigt, können beliebig oft zusammengefasst werden und bilden ein beliebig komplexes Anpassnetzwerk 8 ab.

Die Ausführungsvariante der Fig. 3c zeigt ein Beispiel eines Antennen-Anpassnetzwerkes, bei dem mehrere parallel geschaltete unterschiedliche Antennenimpedanz-Anpassungen 19 (Anpassungsnetze) S_match1-S_matchN realisiert werden, die von der Kontrolllogik 7 mittels zwei Schaltern 26, 26a jeweils abwechselnd auf den Sende- und/oder Empfangspfand aufgeschaltet werden können.

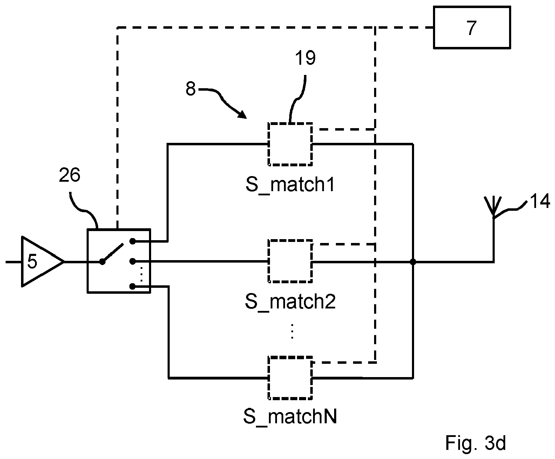

Die Ausführungsvariante der Fig. 3d zeigt ein weiteres Beispiel eines Antennen-Anpassnetzwerkes, bei dem mehrere parallel geschaltete unterschiedliche Antennenimpedanz-Anpassungen 19 (Anpassungsnetze) S_match1-S_matchN vorgesehen sind und von Kontrolllogik 7 mittels eines einzigen Schalters 26 auf den Sende- und/oder Empfangspfand aufgeschaltet werden können.

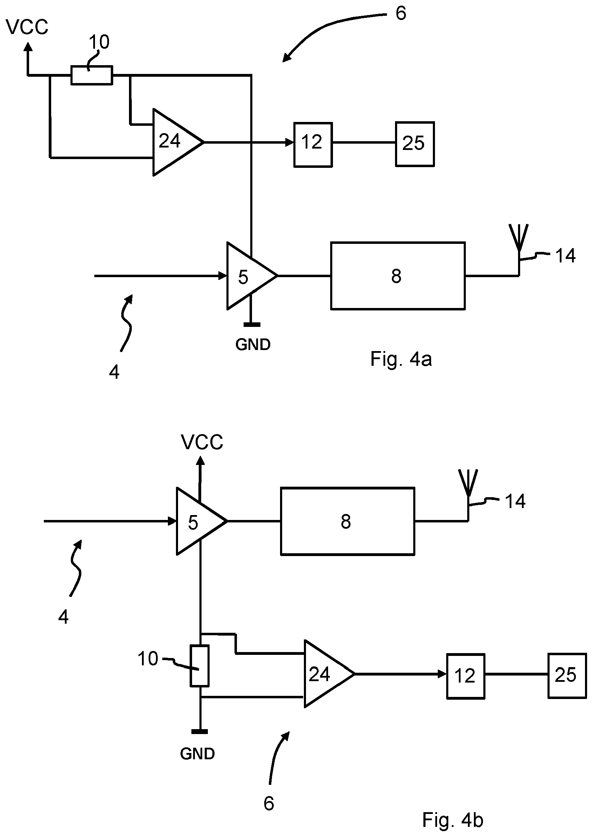

Fig. 4a zeigt ein Beispiel einer Strommessschaltung 6 des DC-Stroms des HF-Leistungsverstärkers 5. Die Strommessschaltung 6 umfasst einen Widerstand 26, vorzugsweise Shunt-Widerstand, der sich im Versorgungspfad des HF-Leistungsverstärkers 5 befindet. Der Widerstand 26 kann entweder in der positiven Versorgungsleitung VCC, vgl. Fig. 4a, oder in der negativen Versorgungsleitung GND, vgl. Fig. 4b, liegen. Der Spannungsabfall wird über den Differenzverstärker 24verstärkt und einem Analog-Digital-Umsetzer 12 zugeführt. Letzterer kann zweckmäßigerweise im Mikrocontroller 25 des Zählers 1-1, 1-n bereits integriert sein. Der Messwiderstand wird zweckmäßigerweise niederohmig gewählt, damit die Versorgungsspannung des HF-Leistungsverstärkers 5 nicht zu stark einbricht.

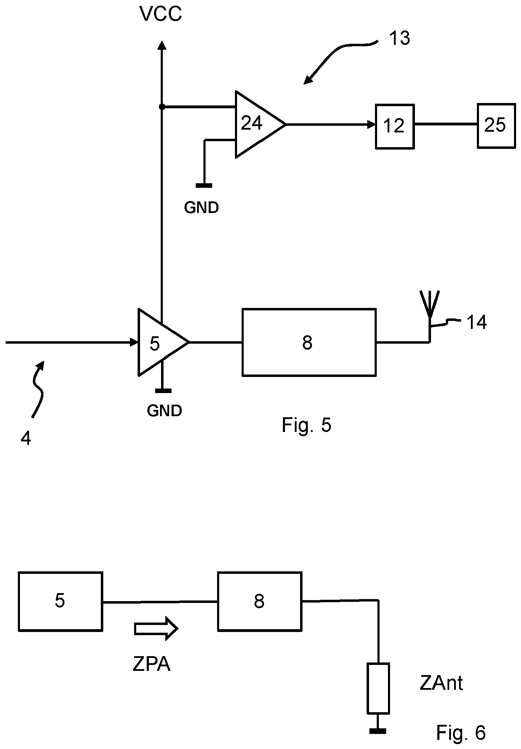

Fig 5 zeigt ein Beispiel einer Spannungsmessschaltung 13 zum Messen der Versorgungsspannung des HF-Leistungsverstärkers bzw. deren Veränderung. Die Spannungsmessschaltung 13 umfasst einen Differenzverstärker 24 oder Komparator, der mit einem Eingang an der negativen Versorgungsleitung GND und mit dem anderen Eingang an der positiven Versorgungsleitung VCC anliegt. Sofern der HF-Leistungsverstärkers 5 "Strom zieht", verändert sich zumindest kurzzeitig die Versorgungsspannung, was durch den Differenzverstärker 24 erfasst wird. Dessen Werte werden in einem A/D-Umsetzer 12 digitalisiert, dem Microcontroller 25 zugeführt und dort ausgewertet und/oder weiterverarbeitet.

Fig. 6 zeigt das Zusammenspiel der komplexen Antennenimpedanz ZAnt sowie des Anpassnetzwerks 8. Aus der Sicht des HF-Leistungsverstärkers 5 stellt sich an dessen Ausgang die komplexe Impedanz ZPA ein. Das Antennen-Anpassnetzwerk 8 kann durch eine Streumatrix beschrieben werden. Über die Streumatrix wird die Antennenimpedanz ZAnt transformiert und dem HF-Leistungsverstärker 5 als transformierte Impedanz ZPA präsentiert. Mathematisch ist die dem HF-Leistungsverstärker 5 präsentierte Impedanz ZPA also eine Funktion von S_match und ZAnt:

$$ZPA = f(S\_match, ZAnt)$$

Das erfindungsgemäße Verfahren kann vor dem Versenden des Datentelegramms für kurze Zeit (z.B. einige wenige Millisekunden lang) durchgeführt werden, indem vor dem eigentlichen Telegramm lediglich kurzzeitige Dummy-Aussendungen mit den jeweils unterschiedlichen Antennenimpedanz-Anpassungen S_match1-S_matchN durchgeführt und daraus anschließend nach dem obigen Schema die unbekannte Antennenimpedanz ZAnt geschätzt wird. Hat die Messung ergeben, dass als optimale Antennenanpassung z. B. die Antennenimpedanz-Anpassung S_match2 auszuwählen ist. Mit dieser Antennenimpedanz-Anpassung wird anschließend das Datentelegramm im Uplink übertragen.

Alternativ kann auch ein Schema implementiert werden, bei dem die Strommessungen bei unterschiedlichen Antennenimpedanz-Anpassungen S_match1-S_matchN zur Bestimmung der Antennenimpedanz über mehrere Telegramme hinweg verteilt werden. Demzufolge wird jedes Telegramm mit einer unterschiedlichen Antennenimpedanz-Anpassung S_match1-S_matchN versendet. Das aufgrund des erfindungsgemäßen Verfahrens aufgefundene optimale Matching, z.B. die Antennenimpedanz-Anpassung S_match2, wird dann für die Übertragung der Telegramme verwendet.

Zweckmäßigerweise können die obigen Prozeduren auch in gewissen bzw. regelmäßigen Abständen wiederholt werden, um Änderungen der Antennenimpedanz zu erfassen. Die Verfahrensweise hat den Vorteil, dass keine zusätzliche Energie sowie Kanalbelegung erforderlich ist.

**BEZUGSZEICHENLISTE**

| | |
|---|---|
| 1-1, 1-n | Knoten |
| 2 | Basisstation |
| 3 | Nahbereichsfrequenzband |
| 4 | Transceiver |
| 5 | HF-Leistungsverstärker |
| 6 | DC-Strommessschaltung |
| 7 | Kontrolllogik |
| 8 | Antennen-Anpassnetzwerk |
| 9 | Antenne |
| 10 | Messwiderstand |
| 11 | Differenzverstärker |
| 12 | A/D-Umsetzer |
| 13 | Spannungsmessschaltung |
| 14 | Antenne |
| 15 | Pin-Diode |
| 16 | Anpasselement |
| 17 | Kondensator |
| 18 | Spule |
| 19 | Antennenanpassung |
| 20 | Batterie |
| 21 | Sensor |
| 22 | Antenne (Basisstation) |
| 23 | Head-End |
| 24 | Differenzverstärker |
| 25 | Mikrocontroller |

| | |
|---|---|
| S_match1-S_matchN | Antennenimpedanz-Anpassungen |
| ZAnt_1-ZAnt_M | M-verschiedenen Antennenimpedanzen |
| I_DC_1-I_DC_N | im Vorfeld erzeugten Stromaufnahme-Messwerte |

I_DCmess_1-I_DCmess_N     tatsächliche Stromaufnahme-Messwerte n

**Patentansprüche**

1. Verfahren zur Bestimmung der Antennenanpassung bei einem drahtlos kommunikationsfähigen Knoten (1-1, 1-n), bei dem auf Basis verschiedener Antennenimpedanz-Anpassungen (S_match1-S_matchN) eines Antennen-Anpassungsnetzwerks (8) eine Verstimmung der Antenne (9) des Knotens (1-1, 1-n) reduziert oder kompensiert wird, **dadurch gekennzeichnet, dass**

   bei N-verschiedenen Antennenimpedanz-Anpassungen (S_match1-S_matchN) die jeweilige DC-Stromaufnahme und/oder Versorgungsspannung des Leistungsverstärkers (5) gemessen wird,
   auf Basis des jeweiligen Messergebnisses eine Auswahl einer Antennenanpassung der N-verschiedenen Antennenimpedanz-Anpassungen (S_match1-S_matchN) erfolgt und
   zur Messung der jeweiligen DC-Stromaufnahme und/oder der Versorgungsspannung des Leistungsverstärkers (5) der Knoten (1-1, 1-n) bei den N-verschiedenen Antennenimpedanz-Anpassungen (S_match1-S_matchN) jeweils eine HF-Aussendung vornimmt.

2. Verfahren nach Anspruch 1, **dadurch gekennzeichnet, dass**

   im Vorfeld für M-verschiedene Antennenimpedanzen je mindestens eine Messung der jeweiligen DC-Stromaufnahme und/oder Versorgungsspannung des Leistungsverstärkers (5) bei N-verschiedenen Antennenimpedanz-Anpassungen (S_match1-S_matchN) durchgeführt wird,
   die Stromaufnahme- und/oder Versorgungsspannungs-Messwerte in Zuordnung zu den N-verschiedenen Antennenimpedanz-Anpassungen (S_match1-S_matchN) sowie M-verschiedenen Antennenimpedanzen in einer Messwerttabelle abgelegt werden,
   während des Betriebs des Knotens (1-1, 1-n) bei N-verschiedenen Antennenimpedanz-Anpassungen (S_match1-S_matchN) die jeweilige tatsächliche DC-Stromaufnahme und/oder Versorgungsspannung des Leistungsverstärkers (5) gemessen wird,
   die im Vorfeld erzeugten tabellierten Messwerte mit den während des Betriebs des Knotens (1-1, 1-n) erzeugten tatsächlichen Messwerten verglichen werden und
   wobei aus dem Ergebnis des Vergleichs eine Antennenimpedanz-Anpassung aus den N-verschiedenen Antennenimpedanz-Anpassungen (S_match1-S_matchN) ausgewählt wird.

3. Verfahren nach Anspruch 1 oder 2, **dadurch gekennzeichnet, dass**
   diejenige Antennenimpedanz-Anpassung der N-verschiedenen Antennenimpedanz-Anpassungen (S_match1-S_matchN) oder diejenige Antennenimpedanz der M-verschiedenen Antennenimpedanzen ausgewählt wird, bei der bei der gegebenen Stromaufnahme die von der Antenne (9) abgestrahlte Leistung am größten ist.

4. Verfahren nach Anspruch 2 oder 3, **dadurch gekennzeichnet, dass**
   die im Vorfeld erzeugten Stromaufnahme- und/oder Versorgungsspannungs-Messwerte sowie die während des Betriebs des Knotens (1-1, 1-n) erzeugten tatsächlichen Stromaufnahme- und/oder Versorgungsspannungs-Messwerte jeweils ein Muster an Werten ergeben und im Rahmen des Vergleichs ein Vergleich der beiden Muster vorgenommen wird.

5. Verfahren nach mindestens einem der vorhergehenden Ansprüche, **dadurch gekennzeichnet, dass**
   die Auswahl einer Antennenanpassung der N-verschiedenen Antennenimpedanz-Anpassungen (S_match1-S_matchN) auf Basis eines Algorithmus erfolgt.

6. Verfahren nach mindestens einem der vorhergehenden Ansprüche, **dadurch gekennzeichnet, dass**
   die Messung der DC-Stromaufnahme des Leistungsverstärkers (5) über eine Strommessschaltung (6) im Versorgungspfad des Leistungsverstärkers (5) erfolgt.

7. Verfahren nach mindestens einem der vorhergehenden Ansprüche **dadurch gekennzeichnet, dass**
   die jeweilige DC-Stromaufnahme des Leistungsverstärkers (5) niederohmig gemessen wird.

8. Verfahren nach Anspruch 6 oder 7, **dadurch gekennzeichnet, dass**
   der Spannungsabfall über den Messwiderstand (10), vorzugsweise über einen Differenzverstärker (11) verstärkt, einem A/D-Umsetzer (12) zugeführt wird.

9. Verfahren nach den Ansprüchen 6 bis 8, **dadurch gekennzeichnet, dass** die Strommessschaltung (6) sich in der positiven oder in der negativen Versorgungsleitung des Leistungsverstärkers (5) befindet.

10. Verfahren nach mindestens einem der vorhergehenden Ansprüche **dadurch gekennzeichnet, dass** eine Spannungsmessschaltung (13) zum Messen der Versorgungsspannung des HF-Leistungsverstärkers bzw. deren Veränderung vorgesehen ist, die einen an der Versorgungsspannung anliegenden Differenzverstärker (24) sowie einen A/D-Umsetzer (12) umfasst.

11. Verfahren nach Anspruch 1, **dadurch gekennzeichnet, dass**
die jeweilige HF-Aussendung bei den verschiedenen Antennenimpedanz-Anpassungen (S_match1-S_matchN) durch den Knoten (1-1, 1-n) als Dummy-Aussendung vor der Aussendung eines Datentelegramms durchgeführt wird und das Datentelegramm erst nach Festlegung einer Antennenimpedanz-Anpassung aus den N-verschiedenen Antennenimpedanz-Anpassungen (S_match1-S_matchN) gesendet wird.

12. Verfahren nach Anspruch 1 oder 11, **dadurch gekennzeichnet, dass**
die jeweilige HF-Aussendung bei verschiedenen Antennenimpedanz-Anpassungen (S_match1-S_matchN) durch den Knoten (1-1, 1-n) im Rahmen mehrerer Datentelegramme (27) durchgeführt wird und erst nach den mehreren versendeten Datentelegrammen (27) eine Festlegung einer Antennenimpedanz-Anpassung aus den N-verschiedenen Antennenimpedanz-Anpassungen (S_match1-S_matchN) erfolgt.

13. Verfahren nach mindestens einem der vorhergehenden Ansprüche, **dadurch gekennzeichnet, dass**
es sich bei dem Nahbereichsfrequenzband (3) um ein 169-MHz-Band handelt.

14. Verfahren nach mindestens einem der vorhergehenden Ansprüche, **dadurch gekennzeichnet, dass**
es sich bei dem Knoten (1-1, 1-n) um einen Verbrauchszähler handelt.

15. Einrichtung zur Bestimmung der Antennenanpassung für einen drahtlos kommunikationsfähigen Knoten (1-1, 1-n), mit

einem Transceiver (4), der einen Leistungsverstärker (5) umfasst, sowie
einem Antennen-Anpassungsnetzwerk (8), welches die Einstellung von verschiedenen Antennenimpedanz-Anpassungen (S_match1-S_matchN) erlaubt, die auf den Transceiver (4) wahlweise aufschaltbar sind, unter Anwendung des Verfahrens nach mindestens einem der Ansprüche 1 bis 14, **gekennzeichnet durch**
eine Strommessschaltung (6) zur Messung der DC-Stromaufnahme des Leistungsverstärkers (5) bei den verschiedenen Antennenimpedanz-Anpassungen (S_match1-S_matchN) und/oder
eine Spannungsmessschaltung (13) zur Messung der Betriebsspannung des Leistungsverstärkers (5) bei den verschiedenen Antennenimpedanz-Anpassungen (S_match1-S_matchN), und
eine Auswertelogik zur Auswahl einer der verschiedenen Antennenimpedanz-Anpassungen, basierend auf Messergebnissen der Strommessschaltung und/oder Spannungsmessschaltung.

## Claims

1. Method for determining antenna matching in the case of a node (1-1, 1-n) that is capable of wireless communication, in which method detuning of the antenna (9) of the node (1-1, 1-n) is reduced or compensated for on the basis of different antenna impedance matchings (S_match1-S_matchN) of an antenna matching network (8), **characterized in that**

the respective DC current consumption and/or supply voltage of the power amplifier (5) are/is measured in the case of N different antenna impedance matchings (S_match1-S_matchN),
one antenna matching of the N different antenna impedance matchings (S_match1-S_matchN) is selected on the basis of the respective measurement result, and
the node (1-1, 1-n) performs a respective RF transmission in the case of the N different antenna impedance matchings (S_match1-S_matchN) in order to measure the respective DC current consumption and/or supply voltage of the power amplifier (5).

2. Method according to Claim 1, **characterized in that** in each case at least one measurement of the respective DC current consumption and/or supply voltage of the power amplifier (5) in the case of N different antenna impedance matchings (S_match1-S_matchN) is carried out in advance for M different antenna impedances,

the current consumption and/or supply voltage measured values are stored in a table of measured values assigned to the N different antenna impedance matchings (S_match1-S_matchN) and M different antenna impedances,

during operation of the node (1-1, 1-n), the respective actual DC current consumption and/or supply voltage of the power amplifier (5) is measured in the case of N different antenna impedance matchings (S_match1-S_matchN),

the tabulated measured values generated in advance are compared with the actual measured values generated during operation of the node (1-1, 1-n), and

wherein, from the result of the comparison, an antenna impedance matching is selected from the N different antenna impedance matchings (S_match1-S_matchN).

3. Method according to Claim 1 or 2, **characterized in that**
that antenna impedance matching of the N different antenna impedance matchings (S_match1-S_matchN), or that antenna impedance of the M different antenna impedances, in the case of which the power emitted by the antenna (9) is the greatest at the given current consumption is selected.

4. Method according to Claim 2 or 3, **characterized in that**
the current consumption and/or supply voltage measured values generated in advance and the actual current consumption and/or supply voltage measured values generated during operation of the node (1-1, 1-n) in each case produce a pattern of values and the two patterns are compared in the course of the comparison.

5. Method according to at least one of the preceding claims, **characterized in that**
one antenna matching of the N different antenna impedance matchings (S_match1-S_matchN) is selected on the basis of an algorithm.

6. Method according to at least one of the preceding claims, **characterized in that**
the DC current consumption of the power amplifier (5) is measured by way of a current measuring circuit (6) in the supply path of the power amplifier (5).

7. Method according to at least one of the preceding claims, **characterized in that**
the respective DC current consumption of the power amplifier (5) is measured at low resistance.

8. Method according to Claim 6 or 7, **characterized in that**
the voltage drop across the measuring resistor (10), preferably amplified by a differential amplifier (11), is supplied to an A/D converter (12).

9. Method according to Claims 6 to 8, **characterized in that** the current measuring circuit (6) is in the positive or in the negative supply line of the power amplifier (5) .

10. Method according to at least one of the preceding claims, **characterized in that** a voltage measuring circuit (13), which comprises a differential amplifier (24) connected to the supply voltage and an A/D converter (12), is provided to measure the supply voltage of the RF power amplifier or the change therein.

11. Method according to Claim 1, **characterized in that** the respective RF transmission is carried out in the case of the different antenna impedance matchings (S_match1-S_matchN) by the node (1-1, 1-n) as a dummy transmission before a data telegram has been transmitted, and the data telegram is transmitted only after one antenna impedance matching out of the N different antenna impedance matchings (S_match1-S_matchN) has been determined.

12. Method according to Claim 1 or 11, **characterized in that**
the respective RF transmission is carried out in the case of different antenna impedance matchings (S_match1-S_matchN) by the node (1-1, 1-n) in the course of a plurality of data telegrams (27), and one antenna impedance matching is determined out of the N different antenna impedance matchings (S_match1-S_matchN) only after the plurality of sent data telegrams (27).

**13.** Method according to at least one of the preceding claims, **characterized in that**
the short-range frequency band (3) is a 169 MHz band.

**14.** Method according to at least one of the preceding claims, **characterized in that**
the node (1-1, 1-n) is a consumption meter.

**15.** Apparatus for determining antenna matching for a node (1-1, 1-n) that is capable of wireless communication, comprising

a transceiver (4) that comprises a power amplifier (5), and
an antenna matching network (8) that allows different antenna impedance matchings (S_match1-S_matchN) to be set that are optionally switchable onto the transceiver (4) using the method according to at least one of the preceding Claims 1 to 14, **characterized by**
a current measuring circuit (6) for measuring the DC current consumption of the power amplifier (5) in the case of the different antenna impedance matchings (S_match1-S_matchN), and/or
a voltage measuring circuit (13) for measuring the operating voltage of the power amplifier (5) in the case of the different antenna impedance matchings (S_match1-S_matchN), and
an evaluation logic unit for selecting one of the different antenna impedance matchings on the basis of measurement results of the current measuring circuit and/or voltage measuring circuit.

**Revendications**

**1.** Procédé permettant de déterminer l'adaptation d'antenne au niveau d'un noeud (1-1, 1-n) de communication sans fil, dans lequel un désaccord de l'antenne (9) du noeud (1-1, 1-n) est réduit ou compensé sur la base de différentes adaptations d'impédance d'antenne (S_match1-S_matchN) d'un réseau d'adaptation d'antenne (8), **caractérisé en ce que**

la consommation de courant continu et/ou la tension d'alimentation respective(s) de l'amplificateur de puissance (5) est/sont mesurée(s) pour N adaptations d'impédance d'antenne (S_match1-S_matchN) différentes,
une sélection d'une adaptation d'antenne des N adaptations d'impédance d'antenne (S_match1-S_matchN) différentes est effectuée sur la base du résultat de mesure respectif, et
le noeud (1-1, 1-n) effectue avec les N adaptations d'impédance d'antenne (S_match1-S_matchN) différentes respectivement une émission HF pour mesurer la consommation de courant continu et/ou la tension d'alimentation respective(s) de l'amplificateur de puissance (5).

**2.** Procédé selon la revendication 1, **caractérisé en ce que**

au préalable, pour M impédances d'antenne différentes, respectivement au moins une mesure de la consommation de courant continu et/ou de la tension d'alimentation respective(s) de l'amplificateur de puissance (5) est effectuée pour N adaptations d'impédance d'antenne (S_match1-S_matchN) différentes,
les valeurs de mesure de la consommation de courant et/ou de la tension d'alimentation sont mémorisées dans une table de valeurs de mesure en association avec les N adaptations d'impédance d'antenne (S_match1-S_matchN) différentes ainsi que les M impédances d'antenne différentes,
pendant le fonctionnement du noeud (1-1, 1-n), la consommation de courant continu et/ou la tension d'alimentation réelle(s) respective(s) de l'amplificateur de puissance (5) est/sont mesurée(s) pour N adaptations d'impédance d'antenne (S_match1-S_matchN) différentes,
les valeurs de mesure tabulées, générées au préalable, sont comparées avec les valeurs de mesure réelles générées pendant le fonctionnement du noeud (1-1, 1-n), et
dans lequel une adaptation d'impédance d'antenne est sélectionnée parmi les N adaptations d'impédance d'antenne (S_match1-S_matchN) différentes dans le résultat de la comparaison.

**3.** Procédé selon la revendication 1 ou 2, **caractérisé en ce que** l'adaptation d'impédance d'antenne des N adaptations d'impédance d'antenne (S_match1-S_matchN) différentes ou l'impédance d'antenne des M impédances d'antenne différentes est sélectionnée à laquelle la puissance émise par l'antenne (9) est la plus élevée pour la consommation de courant donnée.

**4.** Procédé selon la revendication 2 ou 3, **caractérisé en ce que** les valeurs de mesure de la consommation de courant et/ou de la tension d'alimentation, générées au préalable, ainsi que les valeurs de mesure réelles de la consommation de courant et/ou de la tension d'alimentation, générées pendant le fonctionnement du noeud (1-1, 1-n), produisent respectivement un schéma de valeurs, et une comparaison des deux schémas est effectuée dans le cadre de la comparaison.

5. Procédé selon au moins l'une des revendications précédentes, **caractérisé en ce que** la sélection d'une adaptation d'antenne des N adaptations d'impédance d'antenne (S_match1-S_matchN) différentes est effectuée sur la base d'un algorithme.

6. Procédé selon au moins l'une des revendications précédentes, **caractérisé en ce que** la mesure de la consommation de courant continu de l'amplificateur de puissance (5) est effectuée par un circuit de mesure de courant (6) sur le trajet d'alimentation de l'amplificateur de puissance (5).

7. Procédé selon au moins l'une des revendications précédentes **caractérisé en ce que** la consommation de courant continu respective de l'amplificateur de puissance (5) est mesurée à basse impédance.

8. Procédé selon la revendication 6 ou 7, **caractérisé en ce que** la chute de tension est amenée à un convertisseur A/N (12) par l'intermédiaire de la résistance de mesure (10), de préférence en étant amplifiée par un amplificateur différentiel (11).

9. Procédé selon les revendications 6 à 8, **caractérisé en ce que** le circuit de mesure de courant (6) se trouve dans la ligne d'alimentation positive ou négative de l'amplificateur de puissance (5).

10. Procédé selon au moins l'une des revendications précédentes, **caractérisé en ce qu'**un circuit de mesure de tension (13) est prévu pour mesurer la tension d'alimentation de l'amplificateur de puissance HF ou la variation de celle-ci, qui comprend un amplificateur différentiel (24) appliqué à la tension d'alimentation ainsi qu'un convertisseur A/N (12).

11. Procédé selon la revendication 1, **caractérisé en ce que** l'émission HF respective pour les N adaptations d'impédance d'antenne (S_match1-S_matchN) différentes est effectuée par le noeud (1-1, 1-n) sous forme d'émission factice avant l'émission d'un télégramme de données, et le télégramme de données n'est émis qu'après définition d'une adaptation d'impédance d'antenne parmi les N adaptations d'impédance d'antenne (S_match1-S_matchN) différentes.

12. Procédé selon la revendication 1 ou 11, **caractérisé en ce que** l'émission HF respective est effectuée par le noeud (1-1, 1-n) pour des adaptations d'impédance d'antenne (S_match1-S_matchN) différentes dans le cadre de plusieurs télégrammes de données (27), et une définition d'une adaptation d'impédance d'antenne parmi les N adaptations d'impédance d'antenne (S_match1-S_matchN) différentes n'est effectuée qu'après les plusieurs télégrammes de données (27) émis.

13. Procédé selon au moins l'une des revendications précédentes, **caractérisé en ce que** la bande de fréquences en champ proche (3) est une bande de 169 MHz.

14. Procédé selon au moins l'une des revendications précédentes, **caractérisé en ce que** le noeud (1-1, 1-n) est un compteur de consommation.

15. Dispositif permettant de déterminer une adaptation d'antenne pour un noeud (1-1, 1-n) de communication sans fil, comprenant

un émetteur/récepteur (4) qui comprend un amplificateur de puissance (5), et
un réseau d'adaptation d'antenne (8) qui permet de régler différentes adaptations d'impédance d'antenne (S_match1-S_matchN) qui peuvent être appliquées au choix à l'émetteur/récepteur (4) en utilisant le procédé selon au moins l'une des revendications 1 à 14,
**caractérisé par** un circuit de mesure de courant (6) permettant de mesurer la consommation de courant continu de l'amplificateur de puissance (5) pour les différentes adaptations d'impédance d'antenne (S_match1-S_matchN), et/ou
un circuit de mesure de tension (13) permettant de mesurer la tension de fonctionnement de l'amplificateur de puissance (5) pour les différentes adaptations d'impédance d'antenne (S_match1-S_matchN), et
une logique d'évaluation permettant de sélectionner l'une des adaptations d'impédance d'antenne différentes sur la base des résultats de mesure du circuit de mesure de courant et/ou du circuit de mesure de tension.

Fig. 1

Fig. 2

Fig. 3a

Fig. 3b

Fig. 3c

Fig. 3d

VCC

10

6

24

12    25

4

5

GND

8

14

Fig. 4a

VCC

5

8

14

4

10

24

12    25

GND

6

Fig. 4b

VCC

13

24

12 25

GND

5

8

14

GND

4

Fig. 5

5

8

ZPA

ZAnt

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3285403 A1
- DE 102016010045 A1

- US 5564086 A
- US 20110058627 A1